# EUROPÄISCHE PATENTSCHRIFT

(11) **EP 0 689 555 B1**
(45) Veröffentlichungstag und Bekanntmachung des Hinweises auf die Patenterteilung: **21.05.1997**
(21) Anmeldenummer: 94909115.1
(22) Anmeldetag: 05.03.1994
(51) Int. Cl.: C08F 8/30, C08F 8/48

(54) **POLYCOKONDENSATE AUF BASIS VON ASPARAGINSÄURE, VERFAHREN ZU IHRER HERSTELLUNG UND IHRE VERWENDUNG**
POLYCOCONDENSATES OF ASPARTIC ACID, METHODS OF PRODUCING THEM AND THEIR USE
POLYCOCONDENSATS A BASE D'ACIDE ASPARTIQUE, PROCEDES DE PREPARATION ET UTILISATION

(30) Priorität: 17.03.1993 DE 4308426
(43) Veröffentlichungstag der Anmeldung: 03.01.1996
(73) Patentinhaber: BASF AKTIENGESELLSCHAFT, 67056 Ludwigshafen (DE)
(72) Erfinder: KRONER, Matthias, D-67304 Eisenberg (DE); SCHORNICK, Gunnar, D-67271 Neuleiningen (DE); DENZINGER, Walter, D-67346 Speyer (DE); BAUR, Richard, D-67112 Mutterstadt (DE); KUD, Alexander, D-55234 Eppelsheim (DE); POTTHOFF-KARL, Birgit, D-67061 Ludwigshafen (DE); SCHWENDEMANN, Volker, D-67434 Neustadt (DE)
(86) Internationale Anmeldenummer: EP9400660
(87) Internationale Veröffentlichungsnummer: WO9421695

(56) Entgegenhaltungen:
- EP-A- 0 327 698
- EP-A- 0 452 696
- FR-A- 2 019 085
- DATABASE WPI Derwent Publications Ltd., London, GB; AN 7648999 & JP,A,51 054 694 (AGENCY OF IND SCI TECH) 14. Mai 1976
- DATABASE WPI Derwent Publications Ltd., London, GB; AN 7648999 & JP-A-51 054 694

## Beschreibung

Die Erfindung betrifft Polycokondensate auf Basis von Asparaginsäure die durch Kondensieren von Asparaginsäure in Gegenwart von Carboxylgruppen enthaltenden Polymerisaten erhältlich sind, Verfahren zur Herstellung der Polycokondensate und die Verwendung der Polycokondensate als Zusatz zu Wasch- und Reinigungsmitteln, als Scale-Inhibitor oder als Dispergiermittel für feinteilige Feststoffe.

Aus der US-A-3 634 543 ist bekannt, Copolymerisate aus Olefinen mit 2- bis 4 Kohlenstoffatomen mit 1- bis 50 Mol.-% Acrylsäure oder Methacrylsäure mit Caprolactam zu pfropfen.

Aus der WO-A-92/11297 ist bekannt, Copolymerisate aus α-Olefinen und monoethylenisch ungesättigten Carbonsäuren mit Molekulargewichten von 500 bis 6000 mit ω-Aminocarbonsäuren zur Reaktion zu bringen. Die Reaktionsprodukte haben eine ausgezeichnete Verträglichkeit mit anderen Polymerisaten, insbesondere mit Polyamiden.

Aus der EP-A-0 452 696 sind wäßrige Lösungen oder Dispersionen von hydroxyfunktionellen Copolymerisaten mit Imidstruktureinheiten bekannt, die beispielsweise dadurch hergestellt werden, daß man Anhydridgruppen oder ggf. Carboxylgruppen aufweisende Copolymerisate mit Aminoalkoholen unter Imidbildung bei Temperaturen von 100 bis 200°C zur Reaktion bringt, das Reaktionswasser azeotrop abdestilliert und die Polymerlösung nach zumindest teilweiser Neutralisation der Carboxylgruppen in Wasser löst oder dispergiert und ggf. noch vorliegendes organisches Lösemittel teilweise oder ganz azeotrop abdestilliert. Die hydroxyfunktionellen Copolymerisate werden zur Herstellung von Beschichtungsmitteln, Dichtmassen oder Klebstoffen verwendet.

Der vorliegenden Erfindung liegt die Aufgabe zugrunde, neue Stoffe zur Verfügung zu stellen. Eine weitere Aufgabe der Erfindung ist es, für den Einsatz in Wasch- und Reinigungsmitteln neue Additive aufzuzeigen sowie neue Scale-Inhibitoren und Dispergiermittel zur Verfügung zu stellen.

Die Aufgaben werden gelöst mit Polykondensaten auf Basis von Asparaginsäure, die erhältlich sind durch Kondensieren von (a) Asparaginsäure oder Polyasparaginsäure in Gegenwart von (b) Carboxylgruppen enthaltende Polymerisaten, die mindestens 10 Mol.-% einer monoethylenisch ungesättigten Carbonsäure einpolymerisiert enthalten und Molmassen von mindestens 300 haben, oder von Maleinsäureanhydridgruppen enthaltenden Copolymerisaten im Gewichtsverhältnis (a):(b) von 1000:1 bis 2:1.

Die Aufgabe wird außerdem gelöst mit einem Verfahren zur Herstellung von Polykondensaten auf Basis von Asparaginsäure, wenn man (a) Asparaginsäure oder Polyasparaginsäure in Gegenwart von (b) Carboxylgruppen enthaltenden Polymerisaten, die mindestens 10 Mol.-% einer monoethylenisch ungesättigten Carbonsäure einpolymerisiert enthalten und eine Molmasse von mindestens 300 haben, oder von Maleinsäureanhydridgruppen enthaltenden Copolymerisaten im Gewichtsverhältnis (a) zu (b) von 1000:1 bis 2:1 kondensiert.

Die zuletzt genannten Aufgaben werden gelöst mit der Verwendung der Polycokondensate in Form der freien Säuregruppen oder in mit Ammoniak, Aminen, Alkalimetall- oder Erdalkalimetallbasen neutralisierter Form als Zusatz zu Wasch- und Reinigungsmitteln, als Scale-Inhibitor oder als Dispergiermittel für feinteilige Feststoffe.

Als Komponente (a) für die Herstellung der Polycokondensate kann man L-, D- und DL-Asparaginsäure verwenden. DL-Asparaginsäure ist technisch leicht zugänglich, z.B. durch Umsetzung von Ammoniak mit Maleinsäure oder Fumarsäure. L-Asparaginsäure ist beispielsweise durch asymmetrische L-Aspartase katalysierte Addition von Ammoniak an Fumarsäure erhältlich. Vorzugsweise verwendet man L- und DL-Asparaginsäure oder Mischungen dieser Isomeren zur Herstellung der Polycokondensate.

Als Komponente (b) kommen Carboxylgruppen enthaltende Polymerisate in Betracht, die mindestens 10 Mol.-% einer monoethylenisch ungesättigten Carbonsäure einpolymerisiert enthalten und eine Molmasse von mindestens 300 haben. Bei diesen Polymerisaten kann es sich um Homopolymerisate von monoethylenisch ungesättigten Carbonsäuren oder um Copolymerisate dieser Carbonsäuren mit anderen damit copolymerisierbaren monoethylenisch ungesättigten Monomeren bzw. um Copolymerisate aus mindestens 2 monoethylenisch ungesättigten Carbonsäuren bzw. Anhydriden handeln. Geeignete monoethylenisch ungesättigte Carbonsäuren enthalten vorzugsweise 3 bis 8 Kohlenstoffatome im Molekül, z.B. Acrylsäure, Methacrylsäure, Maleinsäure, Maleinsaureanhydrid, Fumarsäure, Crotonsäure, Citraconsäure, Aconitsäure, Methylenmalonsäure, Methylenbernsteinsäure, Ethacrylsäure und Itaconsäure. Bevorzugte Carboxylgruppen enthaltende Polymerisate sind beispielsweise Homopolymerisate der Maleinsäure, der Acrylsäure und der Methacrylsäure sowie Copolymerisate aus Acrylsaure und Methacrylsäure in jedem beliebigen Verhältnis und Copolymerisate aus Acrylsäure und Maleinsäure, z.B. im Molverhältnis 10:90 bis 90:10. Das Molgewicht der Homo- und Copolymerisate, die als Komponente (b) eingesetzt werden, beträgt 300 bis 250 000 und liegt vorzugsweise in dem Bereich von 350 bis 100 000. Die Homo- und Copolymerisate der monoethylenisch ungesättigten Carbonsäuren können nach allen bekannten Verfahren durch Polymerisieren der Monomeren in wäßrigem Medium oder in einem organischen Lösemittel in Gegenwart von Radikale bildenden Initiatoren hergestellt werden. Prinzipiell eignen sich alle bekannten Verfahren der Substanz-, Lösungs-, Emulsions- und Fällungspolymerisation zur Herstellung der Polymerisate. Vorzugsweise werden nach Lösungspolymerisationsverfahren in Wasser bei Temperaturen von 50 bis 180°C in Gegenwart von Radikale bildenden Initiatoren hergestellte Polymerisate oder durch Substanzpolymerisation bei 180 bis 350°C hergestellte Polymerisate als Komponente (b) eingesetzt. So erhält man beispielsweise Copolymerisate aus Acrylsäure- und Maleinsäureanhydrid mit Molgewichten von 300 bis 30 000, in dem man Acrylsäure und Maleinsäureanhydrid kontinuierlich einem Hochtemperaturreaktor bei Temperaturen von 200 bis 350°C zuführt und darin polymerisiert. Die Polymerisation kann dabei in Abwesenheit oder auch in Gegenwart von Initiatoren erfolgen, die unter den Polymerisationsbedingungen Radikale bilden. Durch Einwirkung von Wasser auf die Copolymerisate hydrolysieren die Anhydridgruppen zu freien Carboxylgruppen.

Copolymerisate aus Acrylsäure und Methacrylsäure werden vorzugsweise durch Lösungspolymerisation in Wasser nach dem aus der EP-B-0 075 820 bekannten Verfahren oder auch durch Polymerisieren in organischen Lösemitteln in Gegenwart von radikalischen Polymerisationsinitiatoren hergestellt.

Man kann auch dimerisierte oder oligomerisierte ungesättigte Fettsäuren verwenden, die beispielsweise durch Cycloaddition von ein- oder mehrfach ungesättigten Fettsäuren erhältlich sind.

Die monoethylenisch ungesättigten Carbonsäuren können gegebenenefalls in Anwesenheit von anderen damit copolymerisierbaren monoethylenisch ungesättigten Monomeren copolymerisiert werden. Die anderen Monomeren, die mit den monoethylenisch ungesättigten Carbonsäuren copolymerisiert werden, sind - sofern sie bei der Copolymerisation mitverwendet werden - in Mengen von 5 bis 95, vorzugsweise 10 bis 90 Gew.-% in einpolymerisierter Form enthalten. Die Copolymerisate sollten mindestens 10 Mol.-% der ethylenisch ungesättigten Carbonsäuren einpolymerisiert enthalten. Geeignete andere Monomere, die mit den monoethylenisch ungesättigten Carbonsäuren copolymerisierbar sind, sind beispielsweise Vinylether, Vinylester, Alkylacrylate, Alkylmethacrylate, Styrol, N-Vinylpyrrolidon, Acrylamid, Methacrylamid, Acrylnitril, Methacrylnitril, Allylalkohol und Allylalkohol-Ethoxylate, Furane und Olefine mit 2 bis 30 C-Atomen. Weitere geeignete Monomere sind Polyalkylenglycolmonovinylether, Polyethylenglycol-C₁-bis C₂₂-alkyl-vinylether, N-Vinylformamid und N-Vinylacetamid. Copolymerisate, die Vinylester, N-Vinylformamid oder N-Vinylacetamid einpolymerisiert enthalten, können durch Hydrolyse in Vinylalkohol- und Vinylamineinheiten enthaltende Polymere umgewandelt werden. Beispiele für geeignete Copolymerisate von monoethylenisch ungesättigten Carbonsäuren oder ihren Anhydriden mit anderen monoethylenisch ungesättigten Verbindungen sind:
Copolymere aus Vinylacetat und Maleinsäure, Copolymere aus Vinylacetat und Acrylsäure oder Methacrylsäure, Terpolymere aus Vinylacetat, Maleinsäure und Acrylsäure oder Methacrylsäure,
Polymere aus Vinylacetat, Acrylsäure und/oder Maleinsäure, wobei die Vinylacetateinheiten in partiell oder vollständig hydrolysierter Form als Vinylalkoholeinheiten enthalten sind,
Copolymere aus Methacrylsäure und Methylmethacrylat,
   Copolymere aus Butylacrylat und Acrylsäure,
   Copolymere aus Styrol und Maleinsäureanhydrid,
   Polyölsäure,
   Polylaurinsäure,
   Pfropfpolymere aus Acrylsäure und/oder Maleinsäure auf Polyethylenglykolen und/oder Polypropylenglykolen,
   Polykondensate aus Terephthalsäure und Polyalkylenoxiden mit Säureendgruppen,
   Copolymere aus Vinylsulfonsäure und Maleinsäure,
   Terpolymer aus Isobuten, Maleinsäure und Acrylsäure,
   Copolymere aus Acrylamid und Acrylsäure,
   Copolymere aus Acrylamid und Maleinsäureanhydrid,
   Terpolymere aus Acrylamid mit Acrylsäure und Maleinsäureanhydrid,
   Copolymere aus N-Vinylpyrrolidon und Maleinsäure und/oder Acrylsäure,
   Copolymere aus N-Vinylformamid und Maleinsäureanhydrid,
   Copolymere aus N-Vinylformamid und Acrylsäure,
   Terpolymere aus N-Vinylformamid und Acrylsäure und Maleinsäure,
   Copolymere aus Vinylamin und Acrylsäure,
   Copolymere aus Vinylamin und Maleinsäure,
   Terpolymere aus Vinylamin, Acrylsäure und Maleinsäure,
   Terpolymer aus Diisobuten, Maleinsäure und Acrylsäure,
   Copolymere aus Isobutylen und Maleinsäureanhydrid,
   Copolymere aus Octadecen und Maleinsäureanhydrid,
   mit Maleinsäureanhydrid gepfropfte Polyethylenwachse,
   Copolymere aus Vinylphosphonsäure und Maleinsäure,
   Copolymere aus Methylvinylether mit Maleinsäureanhydrid,
   Copolymere aus 1,4-Butandiolmonovinylether-Ethoxylaten,
   Maleinsäurediethylester und/oder Acrylsäure und/oder Butylacrylat
   sowie Copolymere aus Diethylenglykolethylvinylether, Maleinsäureanhydrid und/oder Acrylsäure.

Die Maleinsäureanhydrid einpolymerisiert enthaltenden Copolymerisate können vor der Umsetzung mit Asparginsäure teilweise hydrolysiert werden, so daß die Copolymerisate beispielsweise 10 Mol.-% Maleinsäureeinheiten einpolymerisiert enthalten. Das Molekulargewicht der oben angegebenen Copolymerisate beträgt 300 bis 250 000. Die oben beschriebenen Homo- und Copolymerisate weisen eine Molekulargewichtsverteilung auf. Als Maß für die Verteilung wird üblicherweise das Verhältnis M_{w}/Mₙ angegeben, dessen Zahlenwert diesen Homo- und Copolymerisaten größer 1 ist und üblicherweise in dem Bereich zwischen 1,01 und 50 liegt.

Die Polycokondensate auf Basis von Asparaginsäure werden beispielsweise dadurch hergestellt, daß man Asparaginsäure und die Polymerisate (b) gemeinsam der Polykondensation unterwirft oder dadurch, daß man zunächst Asparaginsäure zu Polyasparaginsäure bzw. Polyasparaginsäureimid polykondensiert und nach Zugabe des Polymerisats (b) die Polycokondensation durchführt. Hierfür können alle Techniken der Polykondensation verwendet werden. Beispiele sind Lösungs-, Festphasen- oder Schmelzpolykondensation. In einer bevorzugten Ausführungsform zur Herstellung der erfindungsgemäßen Polycokondensate werden die Komponenten (a) und (b) in einer Lösung in Phosphorsäure zur Polycokondensation eingesetzt. Bei dieser Verfahrensweise kann in den üblicherweise in Betrieben vorhandenen Apparaten, die mit einem Rührer ausgestattet sind, kondensiert werden. Das Verhältnis von Asparaginsäure zu Phosphorsäure kann bei der Polycokondensation mit den Polymeren (b) 1:0,1 bis 1:10 betragen und liegt vorzugsweise in dem Bereich von 1:1 bis 1:5.

Die Polycokondensation der Komponenten (a) und (b) wird bei Temperaturen von 80 bis 270 vorzugsweise 120 bis 250°C vorgenommen.

Eine weitere Herstellvariante besteht darin, zu dem carboxylgruppentragenden Polymer b) und Asparaginsäure in Wasser eine Aufschlämmung oder Lösung zu machen, anschließend das Wasser abzudampfen und den Rückstand thermisch bei bis zu 270°C zu polycokondensieren.

Eine elegante Vorgehensweise besteht darin, Acrylsäure und/oder Methacrylsäure und/oder Maleinsäure in Phosphorsäure oder Phosphorsäure/Wasser Mischungen radikalisch zu polymerisieren und die entstehende phosphorsaure Reaktionslösung mit Asparaginsäure oder Polyasparaginsäure zu versetzen und unter Entfernen von Wasser zu polykondensieren.

Geeignete Copolymerisate (b) können neben Carboxylgruppen auch Derivate von Carbonsäuren enthalten, z.B. in Form der Salze, der Ester, der Amide, der Anhydride oder der Nitrile. Die Carbonsäuregruppen der Polymerisate (b) reagieren mit Asparaginsäure. Bevorzugt sind Umsetzungsprodukte, in denen 5 bis 95 % der Carbonsäuregruppen der Polymeren (b) an der Verknüpfung beteiligt sind und bei denen die verbleibenden Carbonsäuregruppen entweder in der Säureform, als Anhydrid oder in Form des Salzes vorliegen. Die Polycokondensate können Strukturelemente enthalten, in denen Polyasparaginsäuren oder Polyasparaginsaureimide, die aus mindestens 2 Asparaginsäureeinheiten bestehen, salzartig, imidartig oder amidartig mit mindestens einer oder mehrerer der im Polymer (b) enthaltenden Carbonsäuregruppen verbunden sein. Beispielsweise entsteht bei der Polycokondensation von Asparaginsäure mit Maleinsäureanhydridgruppen enthaltenden Polymerisaten die unten angegebene Struktur I oder IV, bei der Polycokondensation von Asparaginsäure mit Acrylsäurepolymeren können die Strukturen II und III entstehen:

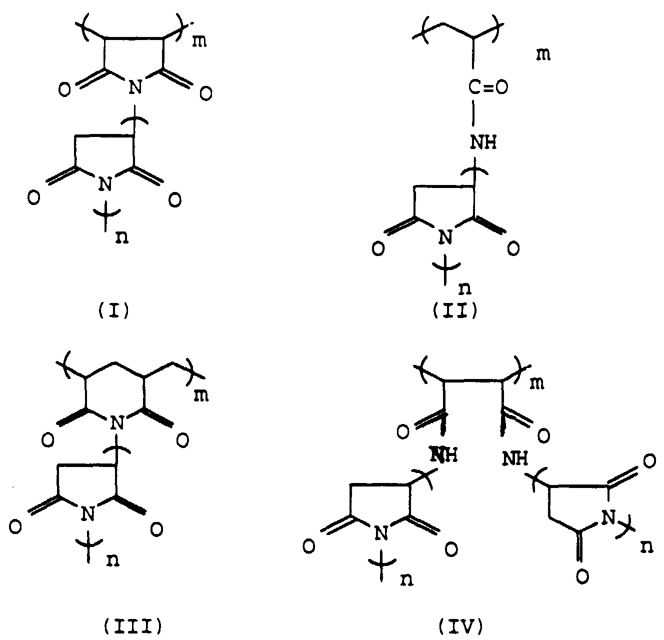

In den oben angegebenen Strukturen I bis IV bedeutet m der Anteil der Carbonsäuren im Polymer (b) der mit Asparaginsäure verknüpft ist und n die Anzahl von Asparaginsäure- bzw. Asparaginimideinheiten, die auf das Polymer (b) gepfropft sind. Die Komponenten (a) und (b) werden bei der Polykondensation im Gewichtsverhältnis 1000:1 bis 2:1, vorzugsweise 100:1 bis 5:1 umgesetzt. Hierbei entstehen Polycokondensate die in 1-%iger Lösung in Dimethylformamid K-Werte nach Fikentscher von 8 bis 100, vorzugsweise 9 bis 60 haben. Durch Hydrolyse der Imidform der Polycokondensate können α- und β-artig verknüpfte Polyasparaginsäuren in den Polycokondensaten enthalten sein. Der Anteil an α- und β-verknüpften Asparaginsäuren kann durch die Hydrolysebedingungen, z.B. den pH-Wert und die Temperatur bei der Hydrolyse beeinflußt werden.

Der Gehalt an Polymer (b) in den Polycokondensaten kann mit Hilfe üblicher spektroskopischer Methoden ermittelt werden.

Acrylsäure enthaltende Polycokondensate werden bevorzugt mittels H-NMR-Spektroskopie untersucht. Wird beispielsweise eine Polyacrylsäure mit Molmasse von 100 000 mit Asparaginsäure polycokondensiert, so kann im Polycokondensat die Anwesenheit der Polyacrylsäure an Signalen der -CH₂-Gruppe zwischen 1,0 und 2,0, sowie der -CH(COOH)-Gruppe bei 2,5-3,0 neben den Signalen des Polyasparaginsäureimidanteils bei 2,5-3,0, 3,0-3,5 und 5,0-5,8 erkannt werden.

Wenn Copolymere aus Acrylsäure und Maleinsäure als Polymer (b) verwendet werden, so können in den Polycokondensaten die einpolymerisierten und einkondensierten Acrylsäureanteile besonders gut mittels H-NMR Spektroskopie erkannt werden. Die Signale der Polymaleinsäure eignen sich weniger gut zur Identifizierung. In diesen Fällen ist die C-NMR Spektroskopie besser zur Strukturaufklärung geeignet. Nach der Polycokondensation können die Polycokondensate durch Behandlung mit Basen, z.B. Natronlauge, Kalilauge, Natriumhydrogencarbonat, Kaliumhydrogencarbonat, Natriumcarbonat, Kaliumcarbonat, Calciumhydroxid, Bariumhydroxid, Ammoniak oder Aminen wie Triethanolamin, Monoethanolamin oder Trimethylamin in die Salzform überführt werden. Die Polycokondensate haben beispielsweise K-Werte von 10 bis 100 (bestimmt nach H. Fikentscher an den Natriumsalzen der Polycokondensate in 1-%iger wäßriger Lösung bei pH 7 und 25°C).

Der Asparaginsäureanteil in den Polycokondensaten ist in wäßriger Lösung biologisch abbaubar. In Form schwer löslicher Salze sind die Polycokondensate kompostierbar und verrottbar.

Die erfindungsgemäßen Polycokondensate werden in Form der Imide, der freien Säuren und vorzugsweise in Form der Salze mit Alkalimetall- oder Ammoniumbasen als Additive zu Wasch- und Reinigungsmitteln, als Scale-Inhibitor in der Wasserbehandlung oder als Dispergiermittel für feinteilige Feststoffe wie Tonmineralien, Kohle, Erze, Metalloxide, Metallsulfide, Kreide und Titandioxid verwendet. Bei Einsatz als Dispergiermittel betragen die anzuwendenden Mengen ca. 0,1 bis 5 Gew.-%, bezogen auf die feinteiligen Feststoffe. Bei der Anwendung als Scale-Inhibitor betragen die Einsatzmengen in aller Regel 1 bis 100 ppm, bezogen auf das zu behandelnde Wasser. Die erfindungsgemäß zu verwendenden Polycokondensate verhindern insbesondere die Bildung und das Wachstum von Härtebildnern des Wassers, insbesondere von Calciumcarbonat, Calciumphosphat, Bariumsulfat, Calciumsulfat und Magnesiumhydroxid.

Die erfindungsgemäßen Polycokondensate werden beim Einsatz als Additiv in phosphatreduzierten oder phosphatfreien Wasch- und Reinigungsmitteln in Mengen von 0,1 bis 30, vorzugsweise 0,5 bis 10 Gew.-%, bezogen auf die jeweiligen Formulierungen eingesetzt. Unter phosphatreduzierten Waschmitteln sollen solche Formulierungen verstanden werden, die nicht mehr als 25 Gew.-% Phosphat, berechnet als Natriumtriphosphat, enthalten. Die Zusammensetzung der Wasch- und Reinigungsmittelformulierungen kann sehr unterschiedlich sein. Sie enthalten üblicherweise 2 bis 50 Gew.-% Tenside und gegebenenfalls Builder. Diese Angaben gelten sowohl für flüssige als auch für pulverförmige Wasch- und Reinigungsmittel. Beispiele für die Zusammensetzung von Waschmittelformulierungen, die in Europa, in den USA und Japan gebräuchlich sind, findet man beispielsweise in Chemical and Engineering Use, Band 67, 35 (1989) tabellarisch zusammengestellt. Die erfindungsgemäßen Polycokondensate werden bei der Herstellung von flüssigen und pulverförmigen Waschmitteln als Viskositätsregulierer, weil sie die Viskosität wäßriger Tensidlösungen und Zeolithaufschlämmungen stark erniedrigen. Beim Waschen entfalten sie inkrustierungsinhibierende und dispergierende Wirkung und unterstützen die Primär- und Sekundärwaschwirkung.

Die erfindungsgemaßen Polycokondensate besitzen in der Waschmittelflotte ein gutes Dispergiervermögen für Partikelschmutz, insbesondere für Tonmineralien (Clay). Diese Eigenschaft ist deshalb wichtig, weil lehmartige Verschmutzungen von Textilgut weit verbreitet sind. Die Polycokondensate sind Builder für Waschmittel und bewirken während des Waschvorgangs eine Reduktion der Inkrustierung und der Vergrauung auf dem gewaschenen Textilgut. Sie sind somit auch als Inkrustations- und Vergrauungsinhibitoren in Waschmitteln geeignet.

Außerdem sind solche Waschmittelformulierungen von Interesse, die bis zu 60 Gew.-% eines Alkalisilikats und bis zu 10 Gew.-% eines erfindungsgemäßen Polycokondensats enthalten. Als Alkalisilikate kommen beispielsweise die amorphen Natriumdisilikate in Betracht, die in der EP-A-0 444 415 beschrieben werden, sowie kristalline Schichtsilikate, die gemäß der EP-A-0 337 219 in Waschmittelformulierungen als Builder enthalten sind und gemäß der EP-B-0 164 514 zur Enthärtung von Wasser verwendet werden, und Natriumsilikate, die durch Entwässern von Natriumsilikatlösungen und Trocknen bis zu Wassergehalten von 15 bis 23, vorzugsweise 18 bis 20 Gew.-% erhältlich sind.

Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die erfindungsgemäßen Polycokondensate können außerdem mit anderen Polymeren, die üblicherweise in Waschmitteln eingesetzt werden, verwendet werden. Hierfür kann man die erfindungsgemäßen Polycokondensate beispielsweise mit den anderen Polymeren mischen, z.B. im Gewichtsverhältnis 1:20 bis 20:1, oder sie bei der Herstellung der Waschmittel separat zugeben. Als andere Polymere eignen sich beispielsweise Polyalkylenglykole, Polyacetale, Pfropfpolymerisate von Vinylacetat oder Methylacrylat auf gegebenenfalls mit Endgruppen verschlossenen Polyalkylenoxiden mit Molmassen bis zu 100 000, Pfropfcopolymerisate von Acrylsäure oder Methacrylsäure und Maleinsäure auf Naturstoffen wie Stärke, abgebauten Stärken, Mono- und Oligosacchariden, sowie Copolymerisate aus Acrylsäure und Maleinsäure mit Molmassen von 5000 bis 250 000, Homopolymerisate der Acrylsäure und Methacrylsäure mit Molmassen bis zu 200 000 und Copolymerisate aus Acrylsäure und Methacrylsäure mit Molmassen von 2000 bis 200 000 sowie Polymaleinsäure mit Molmassen von 500 bis 50 000. Außerdem eignen sich als andere Polymere Sauregruppen enthaltende Polyester, Pektine, Pektinsaure oder Carboxymethylcellulose.

Die K-Werte der Polycokondensate wurden in der Na-Salzform nach H. Fikentscher, Cellulose-Chemie, Band 13, 58-64 von 71 bis 74 (1932) in 1-%iger Lösung in Wasser bei pH 7 und 25°C bestimmt. Die Molmassen der verwendeten Polymeren b) wurden mittels GPC ermittelt. Die Eichung der GPC Auswertung erfolgte mittels Polyacrylsäurestandards, die durch Lichtstreuungsmessungen geeicht wurden.

### Beispiele 1 bis 9

In einem 2 l fassenden Reaktor werden 26 g der in der Tabelle angegebenen Polymerisate vorgelegt und mit 390 g 75-%iger wäßriger Phosphorsäure gemischt und anschließend mit 266 g Asparaginsäure versetzt. Das Reaktionsgemisch wird unter einem Druck von 100 mbar auf eine Temperatur von 100°C erhitzt, wobei Wasser aus dem Reaktionsgemisch abdestilliert. Das Reaktionsgemisch wird dann unter einem Druck von 50 mbar 2 h auf eine Temperatur von 160°C erhitzt, wobei die Polycokondensation vervollständigt wird. In den meisten Fällen entsteht ein klares, homogenes Reaktionsgemisch. Das Polykondensat kann beispielsweise dadurch isoliert werden, daß man die Reaktionslösung in Wasser gießt und den Rückstand abfiltiert und ihn mit Wasser säurefrei wäscht. Die Polycokondensate haben die in der Tabelle angegebenen K-Werte. Die Acrylsäure einpolymerisiert enthaltenden Polycokondensate 2, 3, 4, 7, 8 und 9 lassen im H-NMR (200 MHz, D6-Dimethylsulfoxid) die für Polyacrylsäure typischen Signale erkennen.

**Tabelle 1**

| Polycokondensat | Polymer | Molmasse der Polymeren | K-Wert des Polycokond. |
|---|---|---|---|
| 1 | Polymaleinsäure | 1 000 | 21,9 |
| 2 | Copolymer aus 70 % Acrylsäure und 30 % Maleinsäure | 70 000 | 43,3 |
| 3 | Polyacrylsäure | 1 000 | 28,5 |
| 4 | Polyacrylsäure | 8 000 | 30,3 |
| 5 | Copolymer aus Maleinsäure und 1,4-Butandiolmonovinylether-Ethoxylat mit 8 Ethylenoxideinheiten | 10 000 | 25,6 |
| 6 | Copolymer aus Maleinsäure und Methylvinylester | 70 000 | 38,1 |
| 7 | Modifizierte Polyacrylsäure | 4 000 | 24,1 |
| 8 | Polyacrylsäure | 50 000 | 27,6 |
| 9 | Polyacrylsäure | 100 000 | 42,3 |

Die Polycokondensate 1 bis 9 eignen sich beispielsweise in Mengen von 5 bis 7 Gew.-% in Waschmitteln als Inkrustierungsinhibitor.

Für die Anwendung der Polycokondensate in der Wasserbehandlung ist die Inhibierung von Calciumcarbonat-Ausfällungen von ausschlaggebender Bedeutung. Beispiele sind: Zuckersafteindampfung, Kühlkreisläufe, Meerwasserentsalzungsanlagen, Dampferzeuger, Heizkreisläufe, Warmwasserkreisläufe, Wärmetauscher, Turbinen und Pumpen.

### Calciumcarbonat-Inhibierung (2 ppm Polycokondensat-Konzentration)

Es werden 2 Testlösungen vorbereitet. Testlösung 1 besteht aus Wasser mit 20°dH Calciumhärte und 10°dH Magnesiumhärte. Testlösung 2 ist eine wäßrige Lösung mit 4,7°dH Natriumcarbonat und 12,3°dH Natriumhydrogencarbonat.

In einem 500 ml fassenden Rundkolben, der mit Rührer, Rückflußkühler und Gaseinleitungsrohr ausgestattet ist, werden 150 ml Testlösung 1 und 150 ml Testlösung 2 sowie 2 ppm des zu testenden Polymers vorgelegt und unter Einleiten von Luft (3 1/Std.) für 1 Stunde auf 70°C erhitzt. Man läßt den Kolbeninhalt abkühlen und filtriert durch ein Faltenfilter. Im Filtrat wird nach üblicher Methode der Calciumgehalt durch komplexometrische Titration bestimmt.

Die dabei erhaltenen Ergebnisse sind in Tabelle 2 angegeben. Außerdem sind darin die Werte für die Calcium-Ionenverträglichkeit der Polycokondensate 2 bis 9 aufgeführt. Sie zeigen stabile Löslichkeit auch in Anwesenheit hoher Calciumionenkonzentrationen und können die Ausfällung von Calciumcarbonat gut verhindern.

**Tabelle 2**

| Test auf Calciumcarbonat-Inhibierung: | | | | |
|---|---|---|---|---|
| Beispiel | Polycokondensat | CaCO₃ Inhibierung [%] | | Ca-Ionenverträglichkeit 1000 ppm Ca²⁺ 45 ppm Polycokondensat [% Transmission] |
| | | 1 h | 2 h | |
| 10 | 2 | 53 | 50 | 100 |
| 11 | 3 | 54 | 50 | 100 |
| 12 | 4 | 60 | 61 | 100 |
| 13 | 5 | 59 | 57 | 100 |
| 14 | 6 | 49 | 39 | 89,7 |
| 15 | 7 | 70 | 66 | 100 |
| 16 | 8 | 64 | 64 | 100 |
| 17 | 9 | 50 | 50 | 100 |

Eine Beurteilung von Polymeren bezüglich ihres Einsatzes in Waschmitteln bietet der Test auf Clay-Dispergierung.

### CD-Test (Clay-Dispergierung)

Als Modell für partikuären Schmutz wird feingemahlener China-Clay SPS 151 benutzt. 1 g Clay wird unter Zusatz von 1 ml einer 0,1%igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimentationsprozesses beschreibt. Da der Sedimentationsprozeß annähernd durch ein monoexpotentielles Zeitgesetz beschrieben werden kann, gibt die Dispersionskonstante τdie Zeit an, in der die Trübung auf 1/e-tel des Ausgangszustandes zum Zeitpunkt t = 0 abfällt.

Je höher ein Wert für τ ist, um so langsamer setzt sich die Dispersion ab. Die für einige Polycokondensate ermittelten Werte sind in Tabelle 3 zusammengestellt.

**Tabelle 3**

| Beispiel | Polycokondensat | Trübung in NTU | | | Dispergierkonstante τ |
|---|---|---|---|---|---|
| | | t=0 | t=30 | t=60 | [min] |
| | | [min] | | | |
| 18 | 2 | 740 | 610 | 570 | 288,5 |
| 19 | 3 | 750 | 650 | 580 | 477,5 |
| 20 | 4 | 760 | 590 | 580 | 854,2 |
| 21 | 7 | 740 | 600 | 580 | 484,4 |
| 22 | 8 | 750 | 610 | 570 | 282,1 |
| 23 | 9 | 750 | 610 | 580 | 352,4 |
| Vergleichsbeispiel | Polyacrylsäure M=8000 | 770 | 670 | 630 | 345,1 |

Erfindungsgemäße Polykondensate können Feststoffteilchen gut dispergieren und zeigen dieselbe Wirkung wie eine handelsübliche Polyacrylsäure.

## Patentansprüche

1. Polycokondensate auf Basis von Asparaginsäure, dadurch gekennzeichnet, daß sie erhältlich sind durch Kondensieren von
(a) Asparaginsäure oder Polyasparaginsäure
in Gegenwart von
(b) Carboxylgruppen enthaltenden Polymerisaten, die mindestens 10 Mol.-% einer monoethylenisch ungesättigten Carbonsäure einpolymerisiert enthalten und eine Molmasse von mindestens 300 haben, oder von Maleinsäureanhydridgruppen enthaltenden Copolymerisaten
im Gewichtsverhältnis (a):(b) von 1000:1 bis 2:1.

2. Verfahren zur Herstellung von Polycokondensaten auf Basis von Asparaginsäure, dadurch gekennzeichnet, daß man (a) Asparaginsäure oder Polyasparaginsäure in Gegenwart von (b) Carboxylgruppen enthaltenden Polymerisaten, die mindestens 10 Mol.-% einer monoethylenisch ungesättigten Carbonsäure einpolymerisiert enthalten und eine Molmasse von mindestens 300 haben, oder von Maleinsäureanhydridgruppen enthaltenden Copolymerisaten im Gewichtsverhältnis (a):(b) von 1000:1 bis 2:1 kondensiert.

3. Verfahren nach Anspruch 2, dadurch gekennzeichnet, daß man als Carboxylgruppen enthaltende Polymerisate Homopolymerisate der Maleinsäure oder der Acrylsäure oder Copolymerisate aus Acrylsäure und Maleinsäure einsetzt, wobei die Molmasse der Polymerisate 300 bis 250 000 beträgt.

4. Verwendung der Polycokondensate nach Anspruch 1 in Form der freien Säuregruppen oder in mit Ammoniak, Aminen, Alkalimetall- oder Erdalkalimetallbasen neutralisierter Form als Zusatz zu Wasch- und Reinigungsmitteln, als Scale-Inhibitor oder als Dispergiermittel für feinteilige Feststoffe.

## Claims

1. A polycocondensate based on aspartic acid, which is obtainable by condensing
(a) aspartic acid
in the presence of
(b) polymers containing carboxyl groups, which contain at least 10 mol% of a monoethylenically unsaturated carboxylic acid in copolymerized form and have a molecular weight of at least 300,
in the weight ratio (a):(b) from 1,000:1 to 2:1.

2. A process for preparing polycocondensates based on aspartic acid, which comprises condensing (a) aspartic acid in the presence of (b) polymers containing carboxyl groups, which contain at least 10 mol% of a monoethylenically unsaturated carboxylic acid in copolymerized form and have a molecular weight of at least 300, in the weight ratio (a):(b) from 1,000:1 to 2:1.

3. A process as claimed in claim 2, wherein the polymers containing carboxyl groups employed are homopolymers of maleic acid or of acrylic acid or copolymers of acrylic acid and maleic acid, the molecular weight of the polymers being from 300 to 250,000.

4. The use of the polycocondensates as claimed in claim 1 in the form of the free acid groups or in a form neutralized with ammonia, amines, alkali metal or alkaline earth metal bases as an additive to detergents and cleaners, as scale inhibitors or as dispersants for finely divided solids.

## Revendications

1. Produits de copolycondensation à base d'acide aspartique, caractérisés en ce qu'ils sont obtenus par condensation
(a) d'acide aspartique ou d'acide polyaspartique
en présence
(b) de polymères contenant des groupements carboxyle qui contiennent en liaison polymère au moins 10% en moles d'un acide carboxylique à insaturation monoéthylénique et ont une masse moléculaire d'au moins 300, ou de copolymères contenant des groupements anhydride maléique,
dans un rapport pondéral de (a) à (b) de 1000:1 à 2:1.

2. Procédé de préparation de produits de copolycondensation à base d'acide aspartique, caractérisé en ce que l'on condense (a) de l'acide aspartique ou de l'acide polyaspartique en présence (b) de polymères contenant des groupements carboxyle qui contiennent en liaison polymère au moins 10% en moles d'un acide carboxylique à insaturation monoéthylénique et ont une masse moléculaire d'au moins 300, ou de copolymères contenant des groupements anhydride maléique, dans un rapport pondéral de (a) à (b) de 1000:1 à 2:1.

3. Procédé selon la revendication 2, caractérisé en ce que l'on utilise, comme polymères contenant des groupements carboxyle, des homopolymères de l'acide maléique ou de l'acide acrylique ou des copolymères d'acide acrylique et d'acide maléique, la masse moléculaire des polymères étant comprise entre 300 et 250 000.

4. Utilisation des produits de copolycondensation selon la revendication 1, sous forme acide libre ou sous forme neutralisée avec de l'ammoniac, des amines, des bases de métaux alcalins ou de métaux alcalino-terreux, comme additif à des produits de lavage et de nettoyage, comme anti-incrustant ou comme dispersant pour des matières solides finement divisées.
